# EUROPEAN PATENT SPECIFICATION

(11) **EP 2 223 439 B1**
(45) Date of publication and mention of the grant of the patent: **19.05.2021**
(21) Application number: 07861096.1
(22) Date of filing: 21.12.2007
(51) Int. Cl.: H04B 7/005

(54) **METHOD FOR SELECTING REFERENCE E-TFCI BASED ON REQUESTED SERVICE**
VERFAHREN ZU REFERENZ-E-TFCI-AUSWAHL AUF DER BASIS DES ANGEFORDERTEN DIENSTS
MÉTHODE DE SÉLECTION D'UN E-TFCI DE RÉFÉRENCE SUR LA BASE D'UN SERVICE DEMANDÉ

(43) Date of publication of application: 01.09.2010
(73) Proprietor: Telefonaktiebolaget LM Ericsson (publ), 164 83 Stockholm (SE)
(72) Inventor: HANNU, Hans, S-976 31 Luleå (SE); ÖKVIST, Peter, S-973 41 Luleå (SE); ERICSSON, Mårten, S-976 32 Luleå (SE)
(74) Representative: Ericsson
(86) International application number: PCT/SE2007/001166
(87) International publication number: WO 2009/082291

(56) References cited:
- WO-A1-2006/077141
- US-A1- 2002 115 443
- US-A1- 2005 281 219

## Description

### TECHNICAL FIELD

The present invention relates to methods and arrangements in a communication system, in particular to methods and arrangements in a first node for providing a parameter value associated with the transmission power of a radio signal sent from a second node.

### BACKGROUND

Recent development concerning mobile broadband services and the emerge of new technologies such as e.g. High Speed Packet Access (HSPA) has considerably improved the capacity of wireless communication systems. HSPA introduces the possibility of downloading and uploading data with a speed of several Mbits/s, which opens up the possibility to provide an amplified range of the available services in wireless communication systems.

There is also an increased interest in IP Multimedia Subsystem (IMS) based services. IMS-based services enable communications in a variety of modes, including voice, text, pictures and video, or any combination of these, in a personal and controlled way. One example of an IMS-based service is the Push to Talk over Cellular (PoC) standard service that enables users to get in touch with individuals or predefined groups of users at the push of a button on their mobile handsets. Presence, seeing in advance who is available for a call, is an example of an integral part of such push to talk services. Voice over IP (VoIP) is another example of an emerging IMS based service.

As the number of different services increase, the user bit rate requirements may vary. Some services may not use the full speed of HSPA, such as e.g. VoIP. Hence, it is important that systems such as HSPA can be efficient also for low bit rate services.

HSPA introduces a number of new channels, e.g. the E-DCH Absolute Grant Channel (E-AGCH), which carries the absolute grants and the E-DCH Relative Grant Channel (E-AGCH) which carries the relative grants. Another example is the E-DCH Physical Control Channel (E-DPCCH), which carries uplink control signaling. Yet an example is the E-DCH Physical Data Channel (E-DPDCH), which carries the user data.

Further, all mobile nodes must have a Dedicated Physical Control Channel (DPCCH), which carries the Transmit Power Control (TPC) commands for the downlink, and also the pilot bits for channel estimation. The DPCCH is power controlled with an inner loop power control (ILPC) towards a SIR-target. The SIR-target is set by an outer loop power control (OLPC), and the quality target may be the Block Error Rate (BLER) or the number of Hybrid Automatic Repeat-reQuest (HARQ) transmissions per block.

The outer loop power control is used to meet the desired quality of service targets. The outer loop power control may be implemented both in the user equipment to meet the downlink quality target and also in the base station to meet the uplink quality target. In wireless communication networks, the downlink is the transmission path from the base station to the user equipment, and the uplink is the transmission path from the user equipment to the base station. It is important that the outer loop power control is able to maintain the desired quality of service target despite varying radio conditions, which is often the case in wireless communication systems.

The transmission power level of the E-DPCCH and E-DPDCH are set relative the DPCCH with some specific power offsets, i.e. β-values or gain factors relative the power level of the DPCCH. For E-DPDCH, the power is also dependent on the selection of E-DCH Transport Format Indicator (E-TFCI); made by the user equipment, as different E-TFCI:s may have different power offsets.

However, the user equipment can choose between 127 different E-TFCI:s depending on the amount of data in transmit buffer and available power. Transferring power offset information for 127 E-TFCI:s from the network to the user equipment would be both time and resource consuming. Instead the network signals a number of reference E-TFCI:s to the user equipment that it would use to interpolate or use other similar methods to obtain a suitable E-DPDCH power offset for its choice of E-TFCI for the next transmission.

The network signals the E-TFCI references during e.g. radio link setup and radio link reconfiguration or similar radio bearer setup message processes. Via a Radio Resource Control (RRC) protocol connection between the Radio Network Controller (RNC) and the UE, the information element concerning inter alia the reference E-TFCI, the power offset, the transport block size etc. is transferred.

What is actually sent in the reference E-TFCI power offset field is an index to a table which contains standardized offset values.

The user equipment then uses interpolation to find the power offset to use for a certain E-TFCI based on the received reference E-TFCI:s.

However, there is not a one-to-one relationship between E-TFCI and the used SIR. Hence, using a limited set of reference E-TFCI:s may give less efficient power offset settings depending on the placement of the E-TFCI:s, and hence lower capacity and/ or system throughput.

Thus the gain factor used in actual data transmission may be inaccurate, which in turn will affect the overall system performance. E.g. when the gain factor is lower than required, more transmission attempts are required to guarantee a successful transmission. Since EUL outer loop power control may be based on transmission attempts, this may result in that the SIR target is increased and more power is allocated to DPCCH. However, this is undesired.

US 2005/281219 A1 discloses a method and apparatus for scheduling uplink data transmission in a mobile communication system. The method and apparatus include a base station scheduler for efficiently allocating radio communication resources in a mobile communication system using an E-DCH or DCH. The method and apparatus further include a User Equipment (UE) for using both an E-DCH and a conventional DCH to efficiently select the data rate of the E-DCH and the data rate of the conventional DCH.

### SUMMARY

The present invention aims at obviating or reducing at least some of the above mentioned disadvantages associated with existing technology.

It is an object of the present invention to provide a mechanism in a node that decreases the transmission power consumption and improves the capacity in a wireless communication system.

While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

The object is achieved by a method in a first node for providing a parameter value. The parameter value is associated with a relation between a transmission power level of a first channel and a transmission power level of a second channel. The radio signal is sent from a second node, to be received by the first node. The radio signal is sent over the first channel and the second channel. The method comprises the step of receiving a signal from the second node. The signal comprises a transfer service request for a first type of service.

Further, the method comprises the step of obtaining the parameter value, based on the requested transfer service of the second node by acquiring statistics on multiple parameter values that have been frequently used previously for the requested transfer service and selecting the most frequently used parameter value from the acquired statistics.

The object is also achieved by an arrangement in a first node for providing a parameter value. The arrangement comprises a reception unit, adapted to receive a signal from a second node.

Further, the arrangement comprises an obtaining unit, adapted to obtain the parameter value, based on a determined requested transfer service of the second node. Furthermore, the arrangement comprises a signal unit, adapted to signal the obtained parameter value to the second node. Additionally, the arrangement comprises a processing unit, adapted to acquire statistics on multiple parameter values that have been frequently used previously for the determined requested transfer service. The parameter is obtained by selecting the most frequently used parameter value from the acquired statistics.

Thanks to the present methods and arrangements, a more accurate reference power offset value is provided, which generates a more appropriate power offset and hence, an efficient radio resource utilization, an increased user throughout, a decreased end-user delay, and improved system capacity.

Thus an advantage of the present methods and arrangements is that more optimized parameter values are provided, which leads to an improved power regulation for radio signals, which saves energy resources.

### BRIEF DESCRIPTION OF THE DRAWINGS

The present invention will now be described more in detail in relation to the enclosed drawings, in which:
- Figure 1: is a block diagram illustrating embodiments of a wireless communication network.
- Figure 2a: is a diagram illustrating the power relation between two channels.
- Figure 2b: is a diagram illustrating different strategies for service based location of reference E-TFCI:s.
- Figure 3: is a flow chart illustrating embodiments of method steps.
- Figure 4: is a block diagram illustrating embodiments of an arrangement in a node.

### DETAILED DESCRIPTION

The invention is defined as a method and an arrangement which may be put into practice in the embodiments described below.

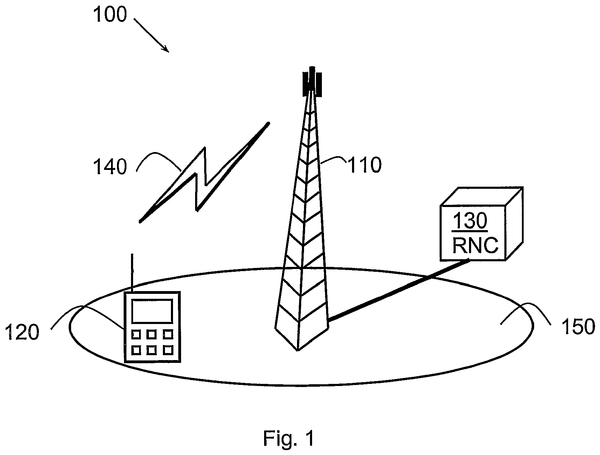

**Figure 1** depicts a first node 110 communicating with a second node 120 within a cell 150 in a wireless communication system 100.

In some embodiments, the first node 110 may be a base station, a wireless communications station, a fixed station, a control station, a repeater or a similar arrangement for radio communication or any other kind of device capable of communicate radio resources.

The second node 120 may be a user equipment such as a mobile cellular radiotelephone, a Personal Digital Assistant (PDA), a laptop, a computer or any similar arrangement for radio communication.

However, the situation may as well be the opposite, such as in some other embodiments, wherein the first node 110 may be a user equipment such as a mobile cellular radiotelephone, a Personal Digital Assistant (PDA), a laptop, a computer or any similar arrangement for radio communication. The second node 120 may be a base station, a wireless communications station, a fixed station, a control station, a repeater or a similar arrangement for radio communication or any other kind of device capable of communicate radio resources.

The wireless communication network 100 may also comprise a control node 130. The control node 130 may be e.g. a Radio Network Controller (RNC). The control node 130 is a governing element in the wireless communication network 100, responsible for control of base stations e.g. the first node 110, which are connected to the control node 130. The control node 130 may carry out radio resource management; some of the mobility management functions and may e.g. be the point where encryption is done before user data is sent to and from the at least one user equipment 120.

The control node 130 is further the node where the function to collect the statistics about the used E-TFCI:s may be placed. By measuring the received data rates in the control node 130 it is possible to judge what area of E-TFCI:s are most common and thus necessary to optimize for.

The wireless communication system 100 may be based on technologies such as e.g. Code Division Multiple Access (CDMA), Wideband Code Division Multiple Access (WCDMA), Enhanced UpLink (EUL) WCDMA, CDMA 2000, High Speed Packet Data Access (HSPA), (including EUL and HSDPA), EVDO version of CDMA 2000, etc.

Radio signals are sent from the second node 120 over a radio link 140 and are received by the first node 110. The power of the signal, which may be too high or too low to be suitable for communication, is adjustable by the receiving first node 110 by e.g. running an inner loop power control, also called fast power control. The inner loop power control may run both on signals sent from the second node 120 to the first node 110, i.e. uplink signals, and from the first node 110 to the second node 120, i.e. downlink signals. The aim of uplink and downlink inner loop power controls are inter alia to counter the effect of fast fading, while maintaining a desired SIR target. It also ensures to compensate for the near-far problem, so that a signal received from users far out in the cell are not swamped out by a stronger signal.

The first node 110 may estimate a SIR value e.g. on some known reference signals such as e.g. pilot symbols and compare it with some SIR target corresponding to a given quality of service target e.g. certain BLER requirements, spreading factor used etc.

In e.g. WCDMA, downlink SIR may be measured on dedicated physical control channel (DPCCH), which comprises pilots and TPC commands for uplink power control. If the measured SIR is lower than SIR target then the inner loop power control at the first node 110 may generate UP command and send it to the second node 120, and if the measured SIR is higher than SIR target then the inner loop power control of the first node 110 may generate DOWN command and send it to the second node 120. In response, the second node 120 will increase, in case of UP command, or decrease, in case of DOWN command, its uplink transmit power.

An outer loop power control is used by the first node 110 and/ or the second node 120 to meet the desired quality of service targets. The outer loop power control may be implemented both in the first node 110 to meet the uplink quality target and in the second node 120 to meet the downlink quality target. It is important that despite varying radio conditions, which is often the case in wireless communication systems 100, the outer loop power control is able to maintain the desired quality of service target.

The outer loop power control may be used to maintain a certain link quality. The quality target may be set by the network 100 and it is expected from the first node 110 to consistently maintain this target to ensure the desired quality of service is met throughout the call session. The value of the quality target may depend upon the type of service, such as speech, packet data, video data etc, which in turn impacts the SIR target used for the inner loop power control. Thus, an adequate power level for providing the quality target of the radio link 140 is easily achieved, during normal signal radio signal conditions.

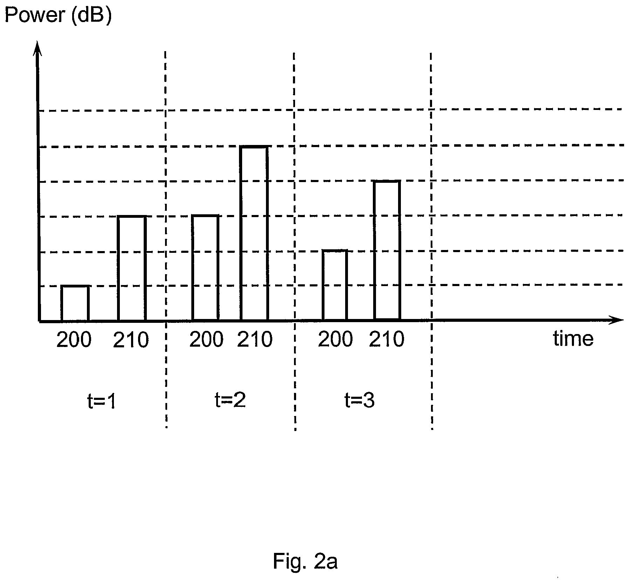

**Figure 2a** is a diagram illustrating the power relation between two channels 200, 210 at three different moments in time. The channels 200, 210 may be a first channel 200 and a second channel 210. The first channel 200 may be a control channel, such as e.g. DPCCH. The second channel 210 may be a data channel, such as e.g. E-DPDCH. The first channel 200 may be adapted to control the data transfer over the second channel 210. The transmit power levels may vary over the time, as demonstrated in the Figure 2a, but the difference in amplitude between the first channel 200 and the second channel 210 remain constant if the sizes of the transport blocks at the three different moments in time that are used on the second channel are the same. The difference between the transmit power levels of the first channel 200 and the second channel 210, and also other channels that may be involved in the signalling between the first node 110 and the second node 120 is sometimes referred to as the power offset, or the gain factor, or β-factor.

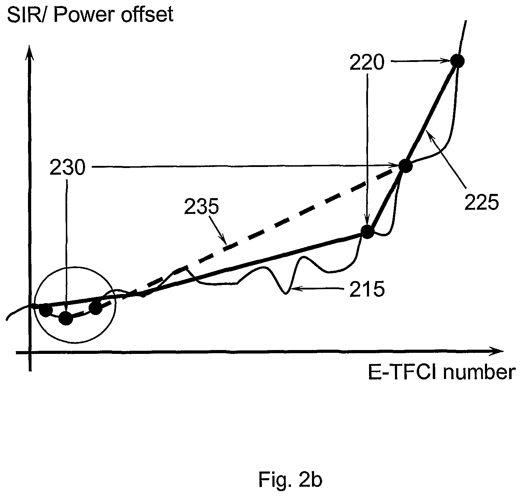

**Figure 2b** is a diagram demonstrating some examples of different strategies for service-based location of reference E-TFCI:s. The break points 230 and dashed line 235 correspond to the improved solution according to the present methods. The break points 230 demonstrate the position of service optimized E-TFCI reference values for VoIP service. The line 215 demonstrates the required SIR, while the break points 220 illustrate the position of non optimized E-TFCI reference values according to the general state of the art. The line 225 illustrates the resulting SIR according to previously known solutions.

As may be seen from Figure 2b, the service based optimized reference E-TFCI:s resulting SIR curve is closer to the required SIR curve for the smaller E-TFCI:s, than for the non-optimized one. The proposed solution is equally useable for high/mid bit rate services, as well as to mixtures thereof.

A general idea according to the present solution is to use different reference E-TFCI depending on the service the user requests, e.g. VoIP, or FTP. For VoIP, the majority of the used E-TFCI:s will be in the low bit rate region, while for FTP, the used E-TFCI:s will be in the high bit rate region. Hence, the solution for these two service example would be to place the reference E-TFCI:s at the large E-TFCI:s for FTP and for VoIP at the small the E-TFCI:s. The illustration according to Figure 2b gives by non- limiting means of illustration only, a generalized idea of the resulting SIR and required SIR for different E-TFCI:s.

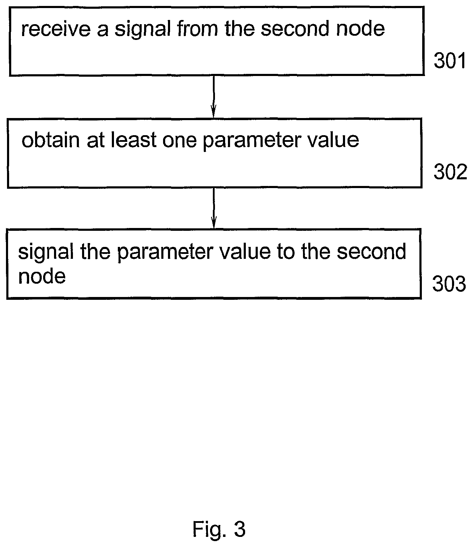

**Figure 3** is a flowchart illustrating a number of method steps 301-303 comprised within a method in a first node 110 for providing a parameter value associated with transmission power of a radio signal sent from a second node 120. Or expressed differently, a method for selecting at least one parameter value which parameter value is associated with the transmission power level of the first channel 200 and/or the relation between the transmission power level of the first channel 200 and the transmission power level of the second channel 210.

As previously discussed, the first node 110 may be a base station and the second node 120 may be a mobile station. However, according to some embodiments, the first node 110 may be a mobile station and the second node 120 may be a base station. However, any, some or even all of the method steps 301-303 performed in the first node 110 may be distributed between the first node 110 and the control node 130. Thus any, some or all of the method steps 301-303 according to the present method may be performed entirely or at least to some extent in the control node 130.

The radio signal is sent from a second node 120 over at least a first channel 200 and a second channel 210. The first channel 200 may be e.g. a control channel such as DPCCH, the second channel 210 may be a data channel such as E-DPDCH. The first channel 200, or control channel, may be adapted to control the data transfer on the second channel 210, or data channel.

To appropriately adjust the transmit power offset for the second node 120, the method may comprise a number of steps 301-303. It is however to be noted that some of the described method steps may comprise optional sub steps, and are thus only comprised within some embodiments. Further, it is to be noted that the method steps 301-303 may be performed in any arbitrary chronological order and that some of them, e.g. step 302 and step 303, or even all steps may be performed simultaneously or in an altered or even completely reversed chronological order. The method comprises the steps of:

### Step 301

The first node 110 receives a signal from the second node 120. The signal may be sent over the first channel 200 or the second channel 210. The signal comprises a transfer service request for a first type of service, such as e.g. Voice over IP (VOIP).

### Step 302

The first node 110 obtains the at least one parameter value, based on the requested transfer service of the second node 120. The parameter value may be associated with the transmission power level of the first channel 200 and the transmission power level of the second channel 210.

Thus the reference E-TFCI:s' positions and power offsets are based on the requested transfer service of the second node 120. There are a number of approaches that may be used in order to establish what reference E-TFCI:s that may be signalled to the second node 120.

One approach may be to let the wireless communication network 100 collect statistics on what E-TFCI:s that are used for different Radio Access Bearers (RAB:s) and/or RAB combinations, i.e. different services. Hence, when a mobile request a particular RAB or RAB combination, the network would base the reference E-TFCI selection on what RAB that is requested. As an example, if E-TFCI #3, #4, #21 and #22 are most commonly used for a particular RAB or RAB combination then the reference E-TFCI:s may be set on, or close to those that statistically are most common. Further, different optimizations schemes may be used for different RAB combinations, i.e. balancing delay versus throughput constraints.

A second approach is to use quality of service requirements to figure out which E-TFCI:s that are most likely to be used, and set the reference E-TFCI:s based on that information. The second approach may be more suitable in systems where enough statistics not yet have been collected, e.g. in an initial phase where the system recently has been deployed/installed.

Thus the position and power offset value of the reference E-TFCI: s may be based on RAB type and RAB combinations, e.g. 2x interactive + 1x conversational class RAB:s. It may also be based on collected statistics about the used E-TFCI:s, and/or quality of service parameters/requirements, number of reference formats (E-TFCI:s), and optimizations strategies etc.

In order to obtain 302 a parameter value, the parameter value may be selected from a group of parameters, comprising: a power offset value, a transport block size value, a SIR target value, a transmission attempts target value, a correctness target value, an error rate target value, such as a Bit Error Rate (BER) target value, BLock Error Rate target value (BLER) and/or a position and value for a channel transport block associated with the transmission power for the second channel 210. Thus the at least one parameter value may be a power offset value and/ or position and value for a channel transport block associated with the transmission power for the second channel 210. The at least one parameter value may be a reference number to such power offset value and/ or position and value for a channel transport block associated with the transmission power for the second channel 210. According to some embodiments, the at least one parameter value may be an initial value for starting a power loop, such as an inner loop power control or an outer loop power control. As an example, the at least one parameter value may be an initial SIR-target value, based on the requested service. An advantage with the later solution is that the number of iterations in the power loop before reaching an acceptable transmit power level may be minimized.

According to some embodiments, step 302 may comprise the optional sub step of acquiring statistics on which parameter value that has been frequently used previously for the requested service. Also, according to some embodiments, step 302 may comprise the optional sub step of selecting one of the most frequently used parameter values from the acquired statistics.

According to yet some embodiments, step 302 may comprise that the transfer service request for a first type of service further comprises service request parameters. Further, the step of obtaining 302 the at least one parameter value may according to some embodiments be performed by selecting the most suitable parameter value base on the service request parameters, for the transfer service requested by the second node 120.

According to yet some embodiments, the step of obtaining 302 the parameter value may comprise the optional sub step of estimating parameter values, based on Quality of Service requirements associated with the requested first service.

### Step 303

Optionally, the first node 110 may signal the obtained at least one parameter value to the second node 120. The at least one parameter value may then be used by the second node 120 as a part of adjusting the transmission power of radio signals sent from the second node 120, to be received by the first node 110.

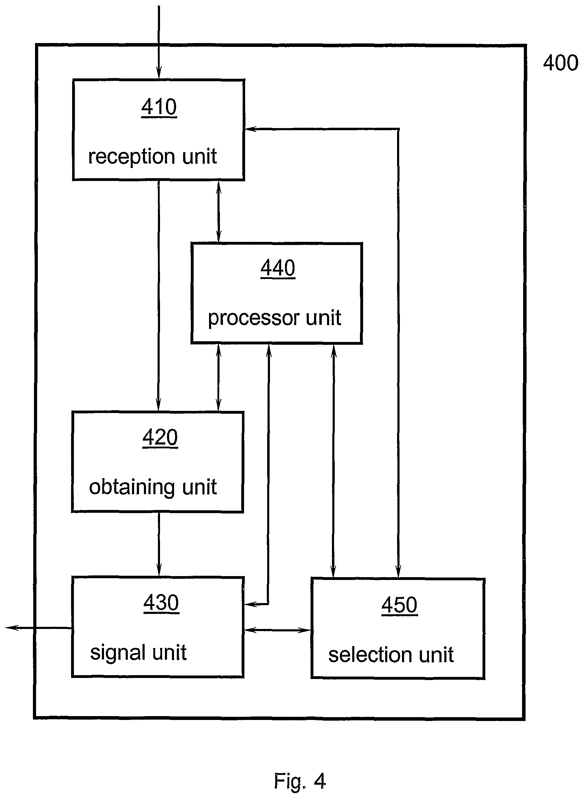

**Figure 4** is a block diagram illustrating embodiments of an arrangement 400 in a first node 110. To perform the method steps 301-303 in the first node 110 for providing a parameter value associated with transmission power of a radio signal, which radio signal is sent from a second node 120 to the first node 110, the first node 110 comprises an arrangement 400 as depicted in Figure 4.

The arrangement 400 is situated in a first node 110, for providing a parameter value. The parameter value is associated with transmission power of a radio signal. The radio signal is sent from a second node 120. The radio signal is sent over a first channel 200 and a second channel 210. The first node arrangement 400 comprises a reception unit 410, adapted to receive a signal from the second node 120.

Further yet, the arrangement 400 comprises an obtaining unit 420, adapted to obtain a parameter value, based on the determined requested transfer service of the second node 120. Still further, the arrangement 400 may, according to some embodiments, comprise a signal unit 430, adapted to signal the obtained parameter value to the second node 120. According to some embodiments of the first node arrangement 400, the arrangement 400 may comprise a processing unit 440. The processing unit 440 may be adapted to acquire statistics on which parameter value that has been frequently used previously for the requested service. According to some embodiments of the first node arrangement 400, the arrangement 400 may also comprise a selection unit 450.

The selection unit 450 may be adapted to select the most appropriate parameter value. The most appropriate parameter value may be e.g. the most frequently used parameter value, for the transmit service requested by the second node 120. Alternatively, the parameter value that is most convenient to be used, based on Quality of Service requirements, may be selected.

Some, several or all of the previously described units i.e. the reception unit 410, the obtaining unit 420, the signal unit 430, the processing unit 440 and/or the selection unit 450 may, according to some embodiments, be comprised within the same physical unit. They may however also be comprised within separate physical units, or even be distributed between a plurality of separate physical units.

Thus an arrangement 400, in a wireless communication system 100 is provided. The first node arrangement 400 is characterized by means for performing the steps 301-303 of the previously described method.

The arrangement 400 may according to some embodiments be comprised in a first node 110, represented by a base station. The arrangement 400 may according to some embodiments be comprised in a first node 110, represented by a user entity 120. The arrangement may according to some embodiments be comprised in a first node 110 represented by a control node, such as e.g. a Radio Network Controller 130. The arrangement may, according to yet some embodiments, be distributed between a plurality of nodes, such as e.g. a base station 110 and a control node 130.

The present method may with particular advantage be used for technologies such as an High-Speed Packet Access (HSPA) including Enhanced Uplink (EUL) in the wireless communication system 100, as the present method and arrangement implements a fast and accurate mechanism to establish a service based power offset reference, which may be used for adjusting the transmission power levels on a plurality of channels 200, 210.

The description of the present method and arrangement has focused mainly and by means of example only, on the uplink power control in the base station 110. The present method and arrangement may however also be performed e.g. partly in the base station controller or radio network controller (RNC) 130, for example when the second node 120 is in soft handover.

Further by means of example and in order to simplify the comprehension, the term SIR has been consistently used in this text when describing a Signal to noise and Interference Ratio, which is the ratio between the level of a desired signal to the level of background noise and signal disturbance. The higher the ratio, the less obtrusive is the background noise. However, there exist other acronyms which are sometimes used to describe the same or a similar ratio, like e.g. the Signal to Noise Ratio (SNR or S/N), Signal to Noise and Interference Ratio (SNIR), Carrier to interference Ratio (CIR), Signal to Interference and Noise Ratio (SINR) or an inversion of the ratio, like Interference to Signal Ratio, (ISR). Any of these or similar ratios may be used in the context of this description instead of the SIR.

The methods in a first node 110 for providing a parameter value associated with the transmission power of a radio signal sent from a second node 120 according to the present methods may be implemented through one or more processors, such as the processor 440 in the arrangement 400 depicted in Figure 4, together with computer program code for performing the functions of the methods. The program code mentioned above may also be provided as a computer program product, for instance in the form of a data carrier carrying computer program code for performing the method according to the present invention when being loaded into the first node 110 and/or the second node 120. The data carrier may be a CD ROM disc, a memory stick, or any other medium such as a disk or tape that can hold machine readable data. The computer program code may furthermore be provided as pure program code on a server and downloaded to the first node 110 and/or the second node 120 remotely.

While the methods and arrangements described in this document are susceptible to various modifications and alternative forms, specific embodiments thereof are shown by way of example in the drawings and are herein described in detail. It should be understood, however, that there is no intent to limit the present methods and arrangements to the particular forms disclosed.

Like reference numbers signify like elements throughout the description of the figures.

As used herein, the singular forms "a," "an," and "the" are intended to include the plural forms as well, unless expressly stated otherwise. It should be further understood that the terms "comprises" and/or "comprising" when used in this specification is taken to specify the presence of stated features, integers, steps, operations, elements, and/or components, but does not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present.

Furthermore, "connected" or "coupled" as used herein may include wirelessly connected or coupled. As used herein, the term "and/or" includes any and all combinations of one or more of the associated listed items.

Unless otherwise defined, all terms including technical and scientific terms used herein have the same meaning as commonly understood by one of ordinary skill in the art to which these methods and arrangements belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

For purposes of illustration, embodiments of the present methods and arrangements are described herein in the context of a base station 110 and a user equipment 120. It will be understood, however, that the present methods and arrangements are not limited to such embodiments and may be embodied generally as any electronic device that includes radio signal propagation means thereon.

## Claims

1. Method in a first node (110) for providing , to a second node, a parameter value associated with a relation between a transmission power level of a first channel (200) and a transmission power level of a second channel (210) from the second node (120), the method comprising the steps of:
*receiving* (301) a signal from the second node (120), the signal comprising a transfer service request for a first type of service,
*obtaining* (302) the parameter value, based on the requested transfer service of the second node (120), by acquiring statistics on multiple parameter values that have been frequently used previously for the requested transfer service and selecting the most frequently used parameter value from the acquired statistics, and
*signalling* (303) the obtained parameter value to the second node (120).

2. Method according to claim 1, wherein the step of obtaining (302) the parameter value is performed by selecting the parameter value from a group of parameters, comprising: a power offset value, a transport block size value, a signal to noise and interference ratio, SIR, target value, a transmission attempts target value, a correctness target value, an error rate target value, such as a Bit Error Rate, BER, target value, BLock Error Rate target value, BLER, and/or a position and value for a transport block associated with a transmission power for the second channel (210).

3. Method according to claim 1 or claim 2, wherein the first node (110) is represented by a base station.

4. Method according to claim 1 or claim 2, wherein the first node (110) is represented by a user equipment.

5. Method according to any of the claims 1-4, wherein the first channel (200) is represented by a control channel.

6. Method according to any of the claims 1-5, wherein the second channel (210) is represented by a data channel.

7. Arrangement (400) for first node (110) for providing, to a second node, a parameter value associated with a relation between a transmission power level of a first channel (200) and a transmission power level of a second channel (210), from the second node (120), the arrangement (400) comprising:
a reception unit (410), adapted to receive a signal from the second node (120),
an obtaining unit (420), adapted to obtain the parameter value, based on a determined requested transfer service of the second node (120),
a signal unit (430), adapted to signal the obtained parameter value to the second node (120), and
a processing unit (440), adapted to acquire statistics on multiple parameter values that have been frequently used previously for the determined requested transfer service,
wherein the parameter value is obtained by selecting the most frequently used parameter value from the acquired statistics.

8. Arrangement (400) according to claim 7, wherein the parameter value is obtained by selecting the parameter value from a group of parameters, comprising: a power offset value, a transport block size value, a signal to noise and interference ratio, SIR, target value, a transmission attempts target value, a correctness target value, an error rate target value, such as a Bit Error Rate, BER, target value, BLock Error Rate target value, BLER, and/or a position and value for a transport block associated with a transmission power for the second channel (210).

9. Arrangement (400) according to claim 7 or claim 8, wherein the first node (110) is represented by a base station or by a user equipment.

10. Arrangement (400) according to any of the claims 7-9, wherein the first channel (200) is represented by a control channel, and wherein the second channel (210) is represented by a data channel.

## Patentansprüche

1. Verfahren in einem ersten Knoten (110) zum Bereitstellen eines Parameterwerts, welcher mit einem Verhältnis zwischen einem Übertragungsleistungspegel eines ersten Kanals (200) und einem Übertragungsleistungspegel eines zweiten Kanals (210) verbunden ist, an einen zweiten Knoten von dem zweiten Knoten (120), wobei das Verfahren die folgenden Schritte umfasst:
*Empfangen* (301) eines Signals von dem zweiten Knoten (120), wobei das Signal eine Übermittlungsdienstanfrage für eine erste Dienstart umfasst,
*Erlangen* (302) des Parameterwertes basierend auf dem angefragten Übermittlungsdienst des zweiten Knotens (120) durch Erwerben von Statistiken zu einer Vielzahl von Parameterwerten, welche vorher regelmäßig für den angefragten Übermittlungsdienst genutzt wurden, und Auswählen des am regelmäßigsten genutzten Parameterwerts aus den erlangten Statistiken, und
*Signalisieren* (303) des erlangten Parameterwerts an den zweiten Knoten (120).

2. Verfahren nach Anspruch 1, wobei der Schritt des Erlangens (302) des Parameterwerts durch ein Auswählen des Parameterwerts aus einer Gruppe von Parametern durchgeführt wird, wobei die Gruppe von Parametern Folgendes umfasst: einen Leistungsabweichungswert, einen Transportblockgrößenwert, einen Signal-Rausch-Abstand (SIR), einen Zielwert, einen Sollwert für Übertragungsversuche, einen Korrektheitssollwert, einen Fehlerquotensollwert, beispielsweise einen Bit-Error-Rate-Sollwert (BER-Sollwert), einen Block-Error-Rate-Sollwert (BLER-Sollwert), und/oder eine Position und einen Wert für einen Transportblock, welcher mit einer Übertragungsleistung für den zweiten Kanal (210) verbunden ist.

3. Verfahren nach Anspruch 1 oder Anspruch 2, wobei der erste Knoten (110) durch eine Basisstation repräsentiert wird.

4. Verfahren nach Anspruch 1 oder Anspruch 2, wobei der erste Knoten (110) durch eine Nutzereinrichtung repräsentiert wird.

5. Verfahren nach einem der Ansprüche 1-4, wobei der erste Kanal (200) durch einen Steuerkanal repräsentiert wird.

6. Verfahren nach einem der Ansprüche 1-5, wobei der zweite Kanal (210) durch einen Datenkanal repräsentiert wird.

7. Anordnung (400) für einen ersten Knoten (110) zum Bereitstellen eines Parameterwerts, welcher mit einem Verhältnis zwischen einem Übertragungsleistungspegel eines ersten Kanals (200) und einem Übertragungsleistungspegel eines zweiten Kanals (210) verbunden ist, an einen zweiten Knoten von dem zweiten Knoten (120), wobei die Anordnung (400) Folgendes umfasst:
eine Empfangseinheit (410), welche dazu ausgelegt ist, ein Signal von dem zweiten Knoten (120) zu empfangen,
eine Erlangungseinheit (420), welche dazu ausgelegt ist, den Parameterwert basierend auf einem angefragten Übermittlungsdienst des zweiten Knotens (120) zu erlangen,
eine Signaleinheit (430), welche dazu ausgelegt ist, den erlangten Parameterwert an den zweiten Knoten (120) zu signalisieren, und
eine Verarbeitungseinheit (440), welche dazu ausgelegt ist, Statistiken zu einer Vielzahl von Parameterwerten zu erwerben, welche vorher regelmäßig für den bestimmten angefragten Übermittlungsdienst genutzt wurden,
wobei der Parameterwert durch ein Auswählen der am regelmäßigsten genutzten Parameterwerte aus den erlangten Statistiken erlangt wird.

8. Anordnung (400) nach Anspruch 7, wobei der Parameterwert durch ein Auswählen des Parameterwerts aus einer Gruppe von Parametern erlangt wird, wobei die Gruppe von Parametern Folgendes umfasst: einen Leistungsabweichungswert, einen Transportblockgrößenwert, einen Signal-Rausch-Abstand (SIR), einen Zielwert, einen Sollwert für Übertragungsversuche, einen Korrektheitssollwert, einen Fehlerquotensollwert, beispielsweise einen Bit-Error-Rate-Sollwert (BER-Sollwert), einen Block-Error-Rate-Sollwert (BLER-Sollwert), und/oder eine Position und einen Wert für einen Transportblock, welcher mit einer Übertragungsleistung für den zweiten Kanal (210) verbunden ist.

9. Anordnung (400) nach Anspruch 7 oder Anspruch 8, wobei der erste Knoten (110) durch eine Basisstation oder durch eine Nutzereinrichtung repräsentiert wird.

10. Anordnung (400) nach einem der Ansprüche 7-9, wobei der erste Kanal (200) durch einen Steuerkanal repräsentiert wird, und wobei der zweite Kanal (210) durch einen Datenkanal repräsentiert wird.

## Revendications

1. Méthode dans un premier nœud (110) pour fournir, à un second nœud, une valeur de paramètre associée à une relation entre un niveau de puissance d'émission d'un premier canal (200) et un niveau de puissance d'émission d'un second canal (210) à partir du second nœud (120), la méthode comprenant les étapes :
de *réception* (301) d'un signal à partir du second nœud (120), le signal comprenant une demande de service de transfert pour un premier type de service,
*d'obtention* (302) de la valeur de paramètre, sur la base du service de transfert demandé du second nœud (120), en acquérant des statistiques sur plusieurs valeurs de paramètres qui ont été fréquemment utilisées précédemment pour le service de transfert demandé et en sélectionnant la valeur de paramètre la plus fréquemment utilisée à partir des statistiques acquises, et de *signalement* (303) de la valeur de paramètre obtenue au second nœud (120).

2. Méthode selon la revendication 1, dans laquelle l'étape d'obtention (302) de la valeur de paramètre est effectuée en sélectionnant la valeur de paramètre à partir d'un groupe de paramètres, comprenant : une valeur de décalage de puissance, une valeur de taille de bloc de transport, une valeur cible de rapport signal sur bruit plus interférences, SIR, une valeur cible de tentatives d'émission, une valeur cible d'exactitude, une valeur cible de taux d'erreur, telle qu'une valeur cible de taux d'erreur sur les bits, BER, une valeur cible de taux d'erreur de bloc, BLER, et/ou une position et une valeur pour un bloc de transport associé à une puissance d'émission pour le second canal (210).

3. Méthode selon la revendication 1 ou la revendication 2, dans laquelle le premier nœud (110) est représenté par une station de base.

4. Méthode selon la revendication 1 ou la revendication 2, dans laquelle le premier nœud (110) est représenté par un équipement utilisateur.

5. Méthode selon l'une quelconque des revendications 1 à 4, dans laquelle le premier canal (200) est représenté par un canal de commande.

6. Méthode selon l'une quelconque des revendications 1 à 5, dans laquelle le second canal (210) est représenté par un canal de données.

7. Agencement (400) pour un premier nœud (110) pour fournir, à un second nœud, une valeur de paramètre associée à une relation entre un niveau de puissance d'émission d'un premier canal (200) et un niveau de puissance d'émission d'un second canal (210), à partir du second nœud (120), l'agencement (400) comprenant :
une unité de réception (410), conçue pour recevoir un signal à partir du second nœud (120),
une unité d'obtention (420), conçue pour obtenir la valeur de paramètre, sur la base d'un service de transfert demandé déterminé du second nœud (120),
une unité de signal (430), conçue pour signaler la valeur de paramètre obtenue au second nœud (120), et
une unité de traitement (440), conçue pour acquérir des statistiques sur de multiples valeurs de paramètres qui ont été fréquemment utilisées précédemment pour le service de transfert demandé déterminé,
dans lequel la valeur de paramètre est obtenue en sélectionnant la valeur de paramètre la plus fréquemment utilisée à partir des statistiques acquises.

8. Agencement (400) selon la revendication 7, dans lequel la valeur de paramètre est obtenue en sélectionnant la valeur de paramètre à partir d'un groupe de paramètres, comprenant : une valeur de décalage de puissance, une valeur de taille de bloc de transport, une valeur cible de rapport signal sur bruit plus interférences, SIR, une valeur cible de tentatives d'émission, une valeur cible d'exactitude, une valeur cible de taux d'erreur, telle qu'une valeur cible de taux d'erreur sur les bits, BER, une valeur cible de taux d'erreur de bloc, BLER, et/ou une position et une valeur pour un bloc de transport associé à une puissance d'émission pour le second canal (210).

9. Agencement (400) selon la revendication 7 ou la revendication 8, dans lequel le premier nœud (110) est représenté par une station de base ou par un équipement utilisateur.

10. Agencement (400) selon l'une quelconque des revendications 7 à 9, dans lequel le premier canal (200) est représenté par un canal de commande, et dans lequel le second canal (210) est représenté par un canal de données.
